# EUROPÄISCHE PATENTANMELDUNG

(11) **EP 2 924 063 A1**
(43) Veröffentlichungstag der Anmeldung: **30.09.2015**
(21) Anmeldenummer: 14162209.2
(22) Anmeldetag: 28.03.2014
(51) Int. Cl.: C08K 3/00, C08K 5/00, C08K 5/1515, C08K 5/42

(54) **Weichmacherzusammensetzung**

(71) Anmelder: LANXESS Deutschland GmbH, 50569 Köln (DE)
(72) Erfinder: Thomas Facklam, Dr., 51375 Leverkusen (DE)

(57) **Zusammenfassung**

Die neuen Zusammensetzungen auf Basis von Alkylsulfonsäurearylestern und epoxidierten pflanzlichen Ölen eignen sich als Weichmacher für Kunststoffe, insbesondere für Polyvinylchlorid und zur Herstellung von Plastisolen.

## Beschreibung

Die vorliegende Erfindung betrifft neue Zusammensetzungen auf Basis von Alkylsulfonsäurearylestern und epoxidierten pflanzlichen Ölen und deren Verwendung als Weichmacher für Kunststoffe.

Zur Verarbeitung von Kunststoffen wie beispielsweise Polyvinylchlorid (PVC) werden seit Jahrzehnten Weichmacher eingesetzt. Weichmacher sind in der Polymerverarbeitung eingesetzte Additive, die die Verarbeitbarkeit, die Flexibilität und die Dehnbarkeit verbessern. Da die Weichmacher nicht fest mit dem Polymeren verbunden sind, können sie migrieren oder sich verflüchtigen. Die zur Erzeugung von Weich-PVC gegenwärtig noch häufig eingesetzten Weichmacher sind überwiegend Phthalsäureester wie Di-2-ethylhexylphthalat (DEHP), Diisononylphthalat (DINP) und Diisodecylphthalat (DIDP).

Allerdings wird die Verwendung von Phthalaten aufgrund gesetzlicher Rahmenbedingungen immer weiter eingeschränkt. Ein Beispiel ist das Verbot und die Beschränkung des Einsatzes einiger Phthalate zur der Herstellung von Spielzeug und Babyartikeln (Richtlinie 2005/84/EG des Europäischen Parlaments und des Rates vom 14. Dezember 2005). Auch wurden von der Europäischen Chemikalienagentur (ECHA) mehrere Phthalate in die Liste der Kandidaten der besonders Besorgnis erregenden Stoffe (SVHC) aufgenommen. Deshalb besteht ein Bedarf an phthalatfreien Weichmachern für Kunststoffe.

Eine bewährte Alternative zu den phthalataltbasierten Weichmachern sind Verbindungen aus der Klasse der Alkylsulfonsäurearylester. Ein Vertreter dieser Klasse ist MESAMOLL® der Firma LANXESS Deutschland GmbH. Markante Eigenschaften von MESAMOLL® als Weichmacher für PVC sind eine hervorragende Gelierfähigkeit und eine sehr gut weichmachende Wirkung.

Es ist weiterhin seit langem bekannt, dass epoxidierte pflanzliche Öle, wie epoxidiertes Sojabohnenöl (ESBO) und epoxidiertes Leinöl (ELO), als Weichmacher in PVC eingesetzt werden können. Ein Nachteil beim Einsatz von epoxidierten pflanzlichen Ölen wie ESBO oder ELO ist deren hohe Viskosität und geringe weichmachende Wirkung. Hinzu kommt, dass bei hohen Einsatzmengen die Entwicklung einer Unverträglichkeit mit PVC eintritt, was sich negativ auf die Gebrauchsdauer der Endartikel auswirkt.

Ein Weichmacher soll nach Verarbeitung in einem Kunststoff in dem hergestellten Endartikel, beispielsweise einer ausgelierten, weichgemachten Polyvinylchlorid-Zubereitung, nicht nur für die gewünschte Weichheit sorgen, sondern auch möglichst resistent gegenüber Migration aus dem Endartikel in angrenzende Kunststoffe sein.

Die aus dem Stand der Technik bekannten Weichmacher sind im Hinblick auf die oben genannten Nachteile noch verbesserungsbedürftig.

Es besteht also weiterhin Bedarf an einem phthalatfreien Weichmacher für Kunststoffe mit guter Verarbeitbarkeit, geringer Neigung zu Migration und langer Lebensdauer der damit hergestellten Endartikel.

Die Aufgabe der vorliegenden Erfindung bestand darin, neue phthalatfreie Weichmacher für Kunststoffe bereit zu stellen, die über gute anwendungstechnische Eigenschaften verfügen und eine geringe Neigung zu Migration in angrenzende Kunststoffe aufweisen.

Es wurde nun gefunden, dass eine Zusammensetzung enthaltend wenigstens einen Alkylsulfonsäurearylester und wenigstens ein epoxidiertes pflanzliches Öl sehr gut als Weichmacher für Kunststoffe geeignet ist.

Der Begriff "Zusammensetzung" bedeutet eine Mischung oder Zubereitung aus zwei oder mehr Komponenten. Alle mit dem Begriff "enthaltend" beanspruchten Zusammensetzungen können zusätzlich Additive oder Hilfs- und Zusatzstoffe enthalten falls nicht aus ausdrücklich anders definiert.

Gegenstand der Erfindung sind Zusammensetzungen enthaltend
a) mindestens einen Alkylsulfonsäurearylester und
b) mindestens ein epoxidiertes pflanzliches Öl.

In einer bevorzugten Ausführungsform enthält die erfindungsgemäße Zusammensetzung die Komponenten a) und b) in einem Gewichtsverhältnis von 4:1 bis 1:4, vorzugsweise von 2:1 bis 1:2.

In einer ebenfalls bevorzugten Ausführungsform enthält die erfindungsgemäße Zusammensetzung die Komponente a) in einer Menge von 20 bis 80 Gew.-% , bevorzugt in einer Menge von 33 bis 67 Gew.-% und ganz besonders bevorzugt von 40 bis 60 Gew.-% und die Komponente b) in einer Menge von 80 bis 20 Gew.-%, bevorzugt in einer Menge von 67 bis 33 Gew.-% und ganz besonders bevorzugt von 60 bis 40 Gew.- %, wobei die Summe der Gewichtsprozent der Komponenten a) und b) jeweils 100 % ergibt.

Die erfindungsgemäßen Zusammensetzungen können entweder nur aus den Komponenten a) und b) bestehen oder sie können außerdem einen oder mehrere Zusatzstoffe enthalten. In diesem Fall sind die Mengen an Komponente a) und Komponente b) innerhalb der angegebenen Bereiche so auszuwählen, dass die Summe aller Komponenten in der Zusammensetzung 100 % ergibt.

Zur Klarstellung sei angemerkt, dass vom Rahmen der Erfindung alle nachfolgend aufgeführten, allgemeinen oder in Vorzugsbereichen genannten Definitionen und Parameter in beliebigen Kombinationen umfasst sind.

Bevorzugt enthalten die erfindungsgemäßen Zusammensetzungen als Komponente a) mindestens einen Alkylsulfonsäurearylester der allgemeinen
Formel (I)

R¹-SO₂-O-R² (I)

worin
R¹ für geradkettiges oder verzweigtes C₁₀- bis C₂₁-Alkyl steht,
und
R² für unsubstituiertes Phenyl oder für Phenyl das ein-, zwei- oder dreifach mit C₁- bis C₄-Alkyl substituiert ist, steht.

Als substituiertes Phenyl seien genannt 2-, 4- und 6-Methylphenyl, 2,6-Dimethylphenyl, 2,4-Dimethylphenyl, 2,4,6-Trimethylphenyl, 2,4-Dimethyl-6-tert.-butylphenyl, 2-, 4-, und 6-Isopropylphenyl, 2-, 4- und 6-n-Butylphenyl, und 2-, 4- und 6-tert-Butylphenyl.

Besonders bevorzugt enthalten die erfindungsgemäßen Zusammensetzugne als Komponete a) mindestens einen Alkylsulfonsäurearylester der Formel (I), worin

R¹ für geradkettiges C₁₀- bis C₂₁-Alkyl, ganz besonders bevorzugt für geradkettiges C₁₀- bis C₁₈-Alkyl, insbesondere für geradkettiges C₁₄- bis C₁₇-Alkyl steht, und

R² für Phenyl steht.

Insbesondere steht R¹ für C₁₄-, C₁₅-, C₁₆- oder C₁₇-Alkyl.

In einer bevorzugten Ausführungsform enthalten die erfindungsgemäßen Zusammensetzungen als Komponente a) ein Gemisch aus mindestens zwei C₁₄- bis C₁₇-Alkylsulfonsäurephenylestern, z.B. MESAMOLL® (Handelsprodukt der Firma LANXESS Deutschland GmbH, CAS Nummern 91082-17-6 und 70775-94-9).

Bei den in den erfindungsgemäßen Zusammensetzungen enthaltenen Komponenten b) handelt es sich um epoxidierte pflanzliche Öle. Bevorzugt handelt es sich um epoxidiertes Sojaöl, epoxidiertes Leinöl, epoxidiertes Olivenöl, epoxidiertes Rüböl, epoxidiertes Sonnenblumenöl, epoxidiertes Pahnkernöl, epoxidiertes Palmöl, epoxidiertes Kokosöl, epoxidiertes Rapsöl, epoxidiertes Rizinusöl oder epoxidiertes Distelöl. Die genannten Verbindungen können einzeln oder in beliebiger Mischung untereinander eingesetzt werden. Besonders bevorzugt wird als Komponente b) epoxidiertes Sojabohnenöl (CAS Nr. 8013-07-8) und/oder epoxidiertes Leinöl (CAS Nr. 8016-11-3) eingesetzt.

Bei den epoxidierten pflanzlichen Ölen der Komponente b) beträgt der Epoxid-Sauerstoffgehalt im allgemeinen zwischen 6 und 11 Gewichtsprozent bezogen auf das Gesamtgewicht des pflanzlichen Öls. Bei dem bevorzugt eingesetzten epoxidierten Sojabohnenöl liegt der Epoxid-Sauerstoffgehalt bei 6 bis 8 Gewichtsprozent, bei dem epoxidierten Leinöl bei 8,5 bis 11 Gewichtsprozent.

Die epoxidierten pflanzlichen Öle sind bekannt und als Handelsprodukte verfügbar; epoxidiertes Sojabohnenöl beispielsweise über Varteco Quimica Puntana S.A., epoxidiertes Leinöl beispielsweise über HallStar.

In einer bevorzugten Ausführungsform sind die erfindungsgemäßen Zusammensetzungen, Polymer-Zusammensetzungen und Kunststoffe im Wesentlichen Phthalat-frei.

Im Wesentlichen Phthalat-frei bedeutet im Rahmen der Erfindung ein Phthalat-Gehalt von weniger als 0,1 Gew.-%, insbesondere weniger als 0,01 Gew.-% bezogen auf das Gewicht der Summe der Komponenten a) und b). Ganz besonders bevorzugt sind die erfindungsgemäßen Zusammensetzungen, Polymer-Zusammensetzungen und Kunststoffe Phtalat-frei. Das bedeutet, dass sie bis auf Spuren, die allgegenwärtig in der Umwelt vorhandenen sind, keine Phthalate enthalten.

Die Verbindungsklasse der Phthalate ist dem Fachmann bekannt. Insbesondere enthalten die erfindungsgemäßen Zusammensetzungen keine Vertreter aus dieser Verbindungsklasse. Als Beispiele für solche Phthalate seien genannt Benzylbutylphthalat (BBP), Di-2-ethylhexylphthalat (DEHP), Diisononylphthalat (DINP) und Diisodecylphthalat (DIDP).

Die erfindungsgemäßen Zusammensetzungen eignen sich hervorragend als Weichmacher für Kunststoffe.

Die erfindungsgemäßen Zusammensetzungen enthalten gegebenenfalls mindestens einen weiteren Hilfs- und/oder Zusatzstoff. Als Hilfs- und Zusatzstoffe kommen bevorzugt solche in Frage, wie sie üblicherweise in Weichmacherzubereitungen eingesetzt werden. Diese werden in für diese Hilfs- und Zusatzstoffe üblichen Mengen eingesetzt. Als Hilfs- und Zusatzstoffe kommen insbesondere flüssige Weichmacher, flüssige Verdünner und/oder flüssige oder lösliche Stabilisatoren in Frage.

In einer bevorzugten Ausführungsform besitzen die erfindungsgemäßen Zusammensetzungen eine Viskosität bei 23°C von 100 mPas bis 400 mPas, insbesondere von 150 mPas bis 300 mPas gemessen mit Rotationsviskosimeter mit Meßsystem MS-Z3 DIN.

Weiterer Gegenstand der vorliegenden Erfindung ist die Verwendung der erfindungsgemäßen Zusammensetzungen als Weichmacher für Kunststoffe, insbesondere für Thermoplaste und Gummi.

Unter dem Begriff "Kunststoffe" sind im Sinne der vorliegenden Erfindung makromolekulare, polymere Verbindungen zu verstehen, die durch Umsetzung von monomeren Verbindungen, z.B. durch Polymerisationsreaktion, hergestellt wurden, wobei Homo- und Copolymere gleichermaßen umfasst sind.

Unter dem Begriffe "Thermoplaste" sind im Sinne der vorliegenden Erfindungen Polymere zu verstehen, die oberhalb einer bestimmten Temperatur weich und formbar werden, die also bei hohen Temperaturen unterhalb der Zersetzungstemperatur fließfähig sind und die beim Erkalten wieder fest werden. Ein Polymer ist eine makromolekulare Verbindung die durch Umsetzung (z.B. Polymerisation, Polykondensation) von Monomeren des gleichen oder unterschiedlichen Typs erzeugt wird. Thermoplaste werden durch Kettenpolymerisation, Polyaddition und/oder Polykondensation hergestellt.

Der Begriff "Gummi" umfasst natürlichen und synthetischen Gummi. Unter dem Begriff "Gummi" sind im Sinne der vorliegenden Erfindung Elastomere zu verstehen, die bis zu ihrer Zersetzungstemperatur vernetzte (vulkanisierte) Polymerwerkstoffe sind, die bei niedrigen Temperaturen glasartig hart sind und selbst bei hohen Temperaturen nicht viskos fließen, sondern sich insbesondere bei Raumtemperatur gummielastisch verhalten. Gummielastisches Verhalten ist gekennzeichnet durch einen relativ niedrigen Schubmodul mit vergleichsweise geringer Temperaturabhängigkeit.

Vorzugsweise eignen sich die erfindungsgemäßen Zusammensetzungen als Weichmacher für Kunststoffe aus der Reihe Polyvinylchlorid, Vinylchlorid-basierte Copolymere, Polyvinylidenchlorid, Polyvinylacetale, Polyacrylate, Polyamide, Polyurethane, Polylactide, Polymilchsäuren, Cellulose oder ihre Derivate, Kautschukpolymere (Gummi) wie Acrylnitril-Butadien-Kautschuk, hydrierter Acrylniril-Butadien-Kautschuk, Chloroprenkautschuk, chloriertes Polyethylen, Chlorsulfonylpolyethylen, Ethylen-Propylen-Kautschuk, Acrylatkautschuk und/oder Epichlorhydrinkautschuk. Die genannten Kunststoffe können auch in beliebiger Mischung untereinander vorliegen. Besonders bevorzugt ist Polyvinylchlorid,

Als PVC-Typen kommen beispielsweise Suspensions-, Masse-, Mikrosuspensions- PVC, bevorzugt Emulsions-PVC in Frage.

In einer bevorzugten Ausführungsform besitzen die erfindungsgemäßen Zusammensetzung eine Lösetemperatur mit PVC von 119°C bis 150°C, insbesondere von 130°C bis 140°C. Geeignete PVC Typen sind im experimentellen Teil der vorliegenden Beschreibung angegeben.

Die Lösetemperatur ist die Temperatur bei der eine heterogene Mischung von Weichmacher und PVC sich in eine homogene Mischung umwandelt, also die Temperatur bei der ein bestimmtes PVC in Weichmachern klar löslich ist. Die Lösetemperatur von PVC in Weichmachern hängt mit dem Geliervermögen eines Weichmachers für PVC eng zusammen. Sie ist ein Maß für eine mögliche Verarbeitungsgeschwindigkeit und die Verträglichkeit eines Weichmachers mit PVC. Eine niedrige Lösetemperatur (< 140°C) zeigt eine mögliche schnelle Verarbeitbarkeit und eine mögliche gute Verträglichkeit an; eine hohe Lösetemperatur (> 160°C) zeigt eine mäßige Verarbeitbarkeit an; eine sehr hohe (> 190°C) und keine ermittelbare Lösetemperatur (> 200°C) zeigt die schlechte Verträglichkeit bzw. Unverträglichkeit des potentiellen Weichmachers mit PVC an. Eine Methode zur Bestimmung der Lösetemperatur ist im experimentellen Teil der vorliegenden Beschreibung angegeben.

Bei ihrem Einsatz als Weichmacher für Kunststoffe werden die erfindungsgemäßen Zusammensetzungen vorzugsweise in einer Menge von 1 bis 300 Teilen auf 100 Teile Kunststoff, bevorzugt 10 bis 150 Teile auf 100 Teile Kunststoff, besonders bevorzugt 20 bis 100 Teile auf 100 Teile Kunststoff eingesetzt.

Bei ihrem Einsatz als Weichmacher für PVC werden die erfindungsgemäßen Zusammensetzungen vorzugsweise in einer Menge von 20 bis 300 Teilen auf 100 Teile PVC, bevorzugt 40 bis 150 Teile auf 100 Teile PVC, besonders bevorzugt 50 bis 100 Teile auf 100 Teile PVC eingesetzt.

Weiterer Gegenstand der vorliegenden Erfindung sind Polymer-Zusammensetzungen enthaltend mindestens eine erfindungsgemäße Zusammensetzung, mindestens einen Kunststoff c) und gegebenenfalls mindestens ein Polymeradditiv i).

Als Polymeradditive i) im Sinne der vorliegenden Erfindung kommen beispielsweise Verbindungen aus der Gruppe der Weichmacher, Stabilisatoren, Antioxidantien, Gleitmittel, Füllstoffe, Pigmente, Flammschutzmittel, Lichtstabilisatoren, Treibmittel, Kicker, polymere Verarbeitungshilfsmittel, Schlagzähverbesserer, Verdünner, optische Aufheller, Antistatika und/oder Biostabilisatoren in Frage.

In einer bevorzugten Ausführungsform der vorliegenden Erfindung handelt es sich bei den erfindungsgemäßen Polymer- Zusammensetzungen um Polyvinylchlorid-Zubereitung.

Die erfindungsgemäßen Polyvinylchlorid-Zusammensetzungen enthalten vorzugsweise auf 100 Gewichtsteile an mindestens einem Polyvinylchlorid
20 bis 300 Gewichtsteile, bevorzugt 40 bis 150 Gewichtsteile, besonders bevorzugt 50 bis 100 Gewichtsteile an mindestens einer erfindungsgemäßen Zusammensetzung und
0 bis 90 Gewichtsteile, bevorzugt 5 bis 70 Gewichtsteile und besonders bevorzugt 10 bis 60 Gewichtsteile an mindestens einem Polymeradditv i).

Bei ihrem Einsatz als Weichmacher verfügen die erfindungsgemäßen Zusammensetzungen über gute anwendungstechnische Eigenschaften, insbesondere erlauben sie eine angepasste Verarbeitungsgeschwindigkeit, verleihen dem Endprodukt eine hohe Thermostabilität und zeichnen sich durch eine geringe Neigung zur Wanderung in angrenzende Kunststoffe (Migration) aus.

Überraschenderweise zeigt sich insbesondere beim Einsatz der erfindungsgemäßen Zusammensetzungen zur Herstellung von weichgemachtem PVC, dass aus dem so hergestellten weichgemachten PVC bei Kontakt mit anderen Kunststoffen wie beispielsweise Polystyrol (PS) oder Acrylnitrilbutadienstyrol-Copolymerisat (ABS), in diese Kunststoffe eine geringere Wanderung stattfindet als es die Linearbeziehung der Wanderung der Einzelkomponenten der erfindungsgemäßen Zusammensetzung erwarten lässt.

Der Einsatz der erfindungsgemäßen Zusammensetzungen in weichgemachten Kunststoffen ermöglicht, bedingt durch deren minimierte Neigung zur Wanderung in angrenzende Kunststoffe, die Herstellung langlebiger Produkte.

Die erfindungsgemäßen Zusammensetzungen und Polymer-Zusammensetzungen lassen sich in bekannter Art und Weise durch Mischen der Komponenten a) und b) und gegebenenfalls mindestens einem Polyvinylchlorid c) und gegebenenfalls mindestens einem Polymeradditiv i) in einer Mischapparatur, vorzugsweise in Rühr- und Mischwerken, Verdünnungsanlagen und statischen Mischern, in den für diese Komponenten angegebenen Mengenverhältnissen herstellen. Dabei können die Komponenten a) und b) der erfindungsgemäßen Zusammensetzung zuerst gemischt werden und dann mit den Komponenten c) und gegebenenfalls i) gemischt werden oder es können jeweils die Komponenten a) und b) getrennt zu den Komponenten c) und gegebenenfalls i) gegeben werden und dann gemischt werden.

Die erfindungsgemäßen Polyvinylchlorid-Zusammensetzungen können als Trockenmischung, dry blends, oder Flüssigmischungen, Pasten, gemischt und gegebenenfalls nach einer zusätzlichen Aufarbeitung zum Granulat weiter verarbeitet werden.

Derartige Verarbeitungsprozesse sind, nicht einschränkend, Extrudieren, Spritzgießen, Spritzen, Kalandrieren, Rotationsformen, Tauchen, Streichen, Beschichten, Sintern, und Gießen.

Gegenstand der vorliegenden Erfindung ist auch ein Verfahren zur Herstellung von weichgemachtem Kunststoff, insbesondere weichgemachtem Polyvinylchlorid, das dadurch gekennzeichnet ist, dass mindestens ein Kunststoff, insbesondere Polyvinylchlorid, mit einer erfindungsgemäßen Zusammensetzung in einer Mischvorrichtung gemischt und homogenisiert wird, anschließend die Mischung geformt wird, insbesondere durch Extrudieren, Spritzgießen, Spritzen, Kalandrieren, Rotationsformen, Tauchen, Streichen, Beschichten, Sintern oder Gießen ausgeformt und die geformte Mischung dann erhitzt wird, vorzugsweise auf eine Temperatur im Bereich von 150 bis 220 °C.

Die mittels der erfindungsgemäßen Zusammensetzungen hergestellten Kunststoffe, insbesondere Polyvinylchlorid, sind ebenfalls Gegenstand der vorliegenden Erfindung.

Die erfindungsgemäßen Kunststoffe können weiterverarbeitet werden. Solche Endprodukte sind insbesondere Fußböden, Tapeten, Kunstleder, Profile, Draht- und Kabelummantelungen, Folien, Beschichtungen und Beschichtungsmassen, Lacke, Farben, Tinten, Klebstoffe, Dichtstoffe, Klebstoff-, Dichtstoff- und Klebdichtstoffkomponenten.

Die vorliegende Erfindung betrifft deshalb auch die Verwendung der erfindungsgemäßen Polymer-Zubereitungen und der erfindungsgemäßen Zusammensetzungen zur Herstellung der genannten Endprodukte.

Die erfindungsgemäßen Zubereitungen werden durch die nachfolgenden, den Erfindungsbereich nicht einschränkenden Beispiele erläutert.

### A) Bestimmung der Lösetemperatur:

48,0 g der zu prüfenden Substanz wurden in ein Becherglas mit Magnetrührstab und Thermometer eingewogen. Das Becherglas wurde auf einen Magnetheizrührer in eine Halterung zwischen eine Lampe und eine Photozelle gesetzt. Über eine Photozelle wurde die Änderung in der Lichtdurchlässigkeit der Probe registriert. Dann wurden 2 g Polyvinylchlorid (Vinnolit® S4170; Vinnolit GmbH & Co. KG, Deutschland*) und mittels Pipette 2 Tropfen PVC-Stabilisator (Organozinnstabilisator, Mark® CZ 11) zugesetzt. Das Polyvinylchlorid wurde in den Weichmacher eingerührt und unter Rühren zügig mit 5-8°C pro Minute auf 100°C aufgeheizt und anschließend mit durchschnittlich 3°C pro Minute weiter aufgeheizt. Die Lösetemperatur galt als erreicht, wenn 3 Minuten hintereinander keinerlei Anstieg des Durchlässigkeitswertes durch die Photozelle mehr registriert wurde und das Polyvinylchlorid gelöst war. Bei Erreichen der Temperatur des Becherglasinhaltes von 200°C wurde die Messung abgebrochen. Eine niedrige Lösetemperatur zeigt eine gute Verträglichkeit des Weichmachers mit Polyvinylchlorid an.

* Bei dem Produkt Vinnolit® S4170 der Vinnolit GmbH & Co. KG, Deutschland handelt es sich um ein Suspensions-PVC mit einem K-Wert (nach ISO 1628-2) von etwa 70, einer reduzierten Viskosität (nach ISO 1628-2) von etwa 124 und einer Schüttdichte (nach ISO 60) von etwa 0,480.

Nach der oben beschriebenen Methode wurden für die in der Tabelle 1 angegebenen Einzelkomponenten der Beispiele 1a und 5a sowie der erfindungsgemäßen Zusammensetzungen der Beispiele 2a bis 4a die Lösetemperatur bestimmt..

**Tabelle 1**

| **Beispiel** | **1a** | **2a** | **3a** | **4a** | **5a** |
|---|---|---|---|---|---|
| Mesamoll^{®1)} | 0% | 33% | 50% | 67% | 100% |
| ESBO²⁾ | 100% | 67% | 50% | 33% | 0% |
| Lösetemperatur [°C] | 150 | 140 | 134 | 130 | 119 |

| | | | | | |
|---|---|---|---|---|---|
| ¹⁾ Produkt der Lanxess Deutschland GmbH, Deutschland, CAS-Nummer 91082-17-6 ²⁾ Produkt von Varteco Quimica Puntana S.A., Argentinien, CAS-Nummer 8013-07-8. | | | | | |

Wie aus den Ergebnissen der Tablelle 1 ersichtlich zeichnen sich die erfindungsgemäßen Zusammensetzungen gegenüber der Einzelkomponente ESBO durch eine geringere Lösungstemperatur und damit gute Verträglichkeit mit Polyvinylchlorid aus.

### Bestimmung der Weichmacherwanderung:

In einer Porzellanschale wurden 100 g Polyvinylchlorid (Vinnolit^{®} S4170, Vinnolit GmbH & Co. KG, Deutschland), mit 60 phr (Gewichtsteile pro 100 Gewichtsteile PVC) Weichmacher bzw. Weichmacherzubereitung und 3 phr PVC-Stabilisator (Ca/Zn-Carboxylat) mit einem Stab so gemischt, dass die flüssigen Bestandteile vom Pulver gut aufgenommen wurden und nicht an dem Gefäß haften. Die so erhaltene Pulvermischung wurde portionsweise in den Walzenspalt (0,7 mm) eines Zweiwalzenstuhles bei 165°C Walzentemperatur gegeben und homogenisiert und geliert. Nach der Fellbildung wurde der Walzenspalt auf 1 mm erweitert. Das Mischergebnis wurde durch häufiges Einschlagen des Walzfelles verbessert. Nach einer Misch- und Verarbeitungszeit von 10 Minuten wurde das Walzfell abgenommen. Nach Portionierung wurden Prüffolien gepresst (1,2 mm Dicke). Die Temperatur der Presse betrug 170 °C; die Presszeit betrug insgesamt 10 Minuten, davon 7 Minuten Aufheizphase mit einem Druck < 10 bar und 3 Minuten Presszeit unter Hochdruck > 100 bar. Nach Abkühlen unter Druck in einer Kühlpresse auf maximal 30°C wurden die Prüfkörper entformt und Rundplatten (5 cm Durchmesser) ausgestanzt. Die Prüf- und Kontaktfolien wurden auf 0,0001 g genau ausgewogen. Hiernach wurde eine Prüffolie zwischen zwei Kontaktfolien (6 cm Rundscheibe, 1 mm Dicke) gelegt. Diese Sandwiches wurden zwischen zwei Glasplatten gelegt. Die so gefertigte Prüfanordnung wurde mit einem 5 kg Gewicht belastet und 12 Tage bei 70°C in den Trockenschrank gestellt. Nach 12 Tagen wurden die Proben entnommen; nach mindestens 1 h Abkühlung wurden die Prüf- und Kontraktfolien ausgewogen. Die Prüfung erfolgte als 3-fach Bestimmung. Ermittelt wurde der Gewichtsverlust der Prüffolie und die Gewichtszunahme der Kontaktfolien. Die Auswertung erfolgte in Prozent. Zur Kalkulation des Gewichtsverlustes der Prüffolien (Spalte Gewichtsverlust kalkuliert in Tabelle 2) mit Weichmachermischungen wurden die Gewichtsverluste der Prüffolien der reinen Substanzen anteilig berechnet und addiert.

Es wurden Messungen mit Kontaktfolien aus Polystyrol (PS) und Acrylnitrilbutadienstyrol-Copolymerisat (ABS) durchgeführt. Die Ergebnisse sind in den Tabellen 2 und 3 aufgeführt. Geringe Gewichtsänderung bedeuten weniger Wanderung, längerer Verbleib des Weichmachers im weichgemachten Kunststoff und eine höhere Resistenz gegen Migration.

Für die erfindungsgemäßen Weichmachermischungen der Beispiele 2b bis 4b und die nicht erfindungsgemäße Beispiel 1a und 5a wurde die Wanderung von Prüfköpern mit einem Gehalt von jeweils 60 phr an Weichmacher beziehungsweise Weichmachermischung bestimmt. Ein niedriger Prozentgehalt des Gewichtsverlustes der Prüffolie und Weichmacheraufnahme der Kontaktfolien ist eine Aussage über die gute Resistenz des Weichmachers gegen Migration.

**Tabelle 2: Migration von weichgemachtem PVC in Kontakt mit PS nach 12 Tagen Lagerung**

| **Beispiele** | **Weichmacher** | **Gewichstverlust experimentell** | **Gewichtsverlust kalkuliert** |
|---|---|---|---|
| 1b | Mesamoll® (60phr) | 5,24% | -- |
| 2b | Mesamoll® (40 phr) + ESBO (20phr) | 1,61% | 3,50% |
| 3b | Mesamoll® (30 phr) + ESBO (30phr) | 0,85% | 2,64% |
| 4b | Mesamoll® (20 phr) + ESBO (40phr) | 0,36% | 1,77% |
| 5b | ESBO® (60phr) | 0,04% | -- |

**Tabelle 3: Migration von weichgemachtem PVC in Kontakt mit ABS nach 12 Tagen Lagerung**

| **Beispiele** | **Weichmacher** | **Gewichstverlust experimentell** | **Gewichtsverlust kalkuliert** |
|---|---|---|---|
| 1b | Mesamoll® (60phr) | 2,88% | -- |
| 2b | Mesamoll® (40 phr) + ESBO (20phr) | 0,31% | 1,94% |
| 3b | Mesamoll® (30 phr) + ESBO (30phr) | 0,08% | 1,47% |
| 4b | Mesamoll® (20 phr) + ESBO (40phr) | 0,07% | 1,00% |
| 5b | ESBO (60phr) | 0,06% | -- |

### Auswertung:

Aus Tabelle 1 geht hervor, dass die erfindungsgemäßen Zusammensetzungen über eine Lösetemperatur im notwendigen Bereich unterhalb von 180°C verfügen. Damit können die erfindungsgemäßen Zubereitungen als effiziente Weichmacher eingesetzt werden.

Aus den Tabellen 2 und 3 geht hervor, dass die erfindungsgemäßen Zusammensetzungen aus damit weichgemachtem PVC in deutlich geringerem Maße in Kontaktpolymere migrieren als es die Kalkulation aus den Migrationsdaten der Einzelkomponenten erwarten lässt. Die erfindungsgemäßen Weichmacher Zusammensetzungen bleiben bei Kontakt mit anderen Kunststoffen wie PS und ABS im weichgemachten Polymeren PVC. Somit ermöglicht der Einsatz der erfindungsgemäßen Zusammensetzungen überraschenderweise die Herstellung von langlebigeren Endprodukten.

## Patentansprüche

1. Zusammensetzung, **dadurch gekennzeichnet, dass** sie
a) mindestens einen Alkylsulfonsäurearylester und
b) mindestens ein epoxidiertes pflanzliches Öl
enthält.

2. Zusammensetzung gemäß Anspruch 1, **dadurch gekennzeichnet, dass** sie die Komponenten a) und b) in einem Gewichtsverhältnis von 4:1 bis 1:4, vorzugsweise von 2:1 bis 1:2 enthält.

3. Zusammensetzung gemäß Ansprüchen 1 oder 2, **dadurch gekennzeichnet, dass** als Komponente a) mindestens ein Alkylsulfonsäurearylester der allgemeinen
Formel (I)
R¹-SO₂-O-R² (I)
worin
R¹ für geradkettiges oder verzweigtes C₁₀- bis C₂₁-Alkyl steht,
und
R² für unsubstituiertes Phenyl oder für Phenyl das ein-, zwei- oder dreifach mit C₁- bis C₄-Alkyl substituiert ist, steht,
enthalten ist.

4. Zusammensetzung gemäß Ansprüchen 1 oder 2, **dadurch gekennzeichnet, dass** als Komponente b) mindestens ein epoxidiertes pflanzliches Öl enthalten ist, das ausgewählt ist aus der Gruppe epoxidiertes Sojaöl, epoxidiertes Leinöl, epoxidiertes Olivenöl, epoxidiertes Rüböl, epoxidiertes Sonnenblumenöl, epoxidiertes Palmkemöl, epoxidiertes Palmöl, epoxidiertes Kokosöl, epoxidiertes Rapsöl, epoxidiertes Rizinusöl oder epoxidiertes Distelöl.

5. Zusammensetzung gemäß wenigstens einem der Ansprüche 1, 2 und 4, **dadurch gekennzeichnet, dass** als Komponente b) expoxidiertes Sojabohnenöl und/oder epoxidiertes Leinöl enthalten ist.

6. Zusammensetzung gemäß wenigstens einem der Ansprüche 1 bis 5, **dadurch gekennzeichnet, dass** sie eine Lösetemperatur mit PVC von 119°C bis 150°C, insbesondere von 130°C bis 140°C aufweist.

7. Zusammensetzung gemäß wenigstens einem der Ansprüche 1 bis 6, **dadurch gekennzeichnet, dass** sie frei von Phthalaten ist.

8. Verwendung einer Zusammensetzung gemäß wenigstens einem der Ansprüche 1 bis 7 als Weichmacher für Kunststoffe, insbesondere für Thermoplaste und Gummi.

9. Verwendung gemäß Anspruch 8, **dadurch gekennzeichnet, dass** es sich bei den Kunststoffen um mindestens ein Polyvinylchlorid handelt, insbesondere um Suspensions-, Masse-, Mikrosuspensions- und/oder Emulsions-PVC.

10. Polymer-Zusammensetzung, **dadurch gekennzeichnet, dass** sie eine Zusammensetzung gemäß wenigstens einem der Ansprüche 1 bis 7, mindestens einen Kunststoff und gegebenenfalls mindestens ein Polymeradditv i) enthält.

11. Polymer-Zusammensetzung gemäß Anspruch 10, **dadurch gekennzeichnet, dass** als Kunststoff mindestens ein Polyvinylchlorid enthalten ist.

12. Verfahren zur Herstellung einer Zusammensetzung gemäß wenigstens einem der Ansprüche 1 bis 7 oder einer Polymer-Zusammensetzungen gemäß wenigstens einem der Ansprüche 10 oder 11, **dadurch gekennzeichnet, dass** die Komponenten a) und b) und gegebenenfalls mindestens ein Kunststoff, insbesondere Polyvinylchlorid, und gegebenenfalls mindestens ein Polymeradditiv i) in einer Mischapparatur, vorzugsweise in Rühr- und Mischwerken, Verdünnungsanlagen und statischen Mischern, gemischt werden, in den für diese Komponenten angegebenen Mengenverhältnissen.

13. Verfahren zur Herstellung von weichgemachtem Kunststoff, insbesondere weichgemachtem Polyvinylchlorid, **dadurch gekennzeichnet, dass** mindestens ein Kunststoff, insbesondere Polyvinylchlorid, mit einer Zusammensetzung gemäß wenigstens einem der Ansprüche 1 bis 7 und gegebenenfalls mindestens ein Polymeradditiv i) in einer Mischvorrichtung gemischt und homogenisiert wird, anschließend die Mischung, insbesondere durch Extrudieren, Spritzgießen, Spritzen, Kalandrieren, Rotationsformen, Tauchen, Streichen, Beschichten, Sintern oder Gießen geformt wird und die geformte Mischung dann erhitzt wird, vorzugsweise auf eine Temperatur im Bereich von 150 bis 220 °C.

14. Kunststoff, insbesondere Polyvinylchlorid, enthaltend eine Zusammensetzung gemäß wenigstens einem der Ansprüche 1 bis 7.

15. Verwendung von mindestens einem Kunststoff gemäß Anspruch 14 zur Herstellung von Formkörpern, insbesondere Fußböden, Tapeten, Kunstleder, Profile, Draht- und Kabelummantelungen, Folien, Beschichtungen und Beschichtungsmassen, Lacke, Farben, Tinten, Klebstoffe, Dichtstoffe, Klebstoff-, Dichtstoff- und Klebdichtstoffkomponenten.

16. Fußböden, Tapeten, Kunstleder, Profile, Draht- und Kabelummantelungen, Folien, Beschichtungen und Beschichtungsmassen, Lacke, Farben, Tinten, Klebstoffe, Dichtstoffe, Klebstoff-, Dichtstoff- und Klebdichtstoffkomponenten enthaltend einen Kunststoff nach Anspruch 14 oder eine Polymer-Zusammensetzung nach einem der Ansprüche 10 oder 11.
